# EUROPEAN PATENT APPLICATION

(11) **EP 3 222 806 A1**
(43) Date of publication of application: **27.09.2017**
(21) Application number: 17160351.7
(22) Date of filing: 10.03.2017
(51) Int. Cl.: E05F 15/622, F16H 25/20

(54) **DOOR OPENING AND CLOSING DEVICE FOR VEHICLE**

(30) Priority: 23.03.2016 JP 2016059190
(71) Applicant: AISIN SEIKI KABUSHIKI KAISHA, Aichi 448-8650 (JP)
(72) Inventor: TSUKAGOSHI, Jun, Kariya-shi, Aichi 448-8650 (JP); OE, Koji, Kariya-shi, Aichi 448-8650 (JP); KATO, Kimihide, Kariya-shi, Aichi 448-8650 (JP); KATSUYAMA, Hiroki, Kariya-shi, Aichi 448-8650 (JP); SENGOKU, Takayuki, Kariya-shi, Aichi 448-8650 (JP); HARUTA, Keisuke, Kariya-shi, Aichi 448-8650 (JP)
(74) Representative: TBK

(57) **Abstract**

A door opening and closing device (10) for a vehicle includes: a supporting member (20, 20B) interposed between a vehicle body (1) and a door (2), and supporting the door to be openable and closable. The supporting member includes first and second housings (30, 40) whose one end sides are linked to the vehicle body or the door via a linking unit, a spindle (32), a spindle nut (46), a coil spring (22) biasing the first and second housings in a direction in which the first and second housings are separated from each other, a motor (52) disposed in the first housing and rotating and driving the spindle, a case (51) accommodating the motor therein, and a spline engaging unit engaging the first housing with the case or a metal member joined to the case not to be relatively movable in the rotational direction using a spline (30b, 56a).

## Description

### TECHNICAL FIELD

The present invention relates to a door opening and closing device for a vehicle.

### BACKGROUND DISCUSSION

In the related art, as such a door opening and closing device for a vehicle, a device which forms an inner housing and an outer housing of a spindle drive which can open and close a door by expanding and contracting by driving a motor, using a plastic material (resin material), is suggested (for example, refer to JP2015-505015T). In the device, weight reduction and cost saving are achieved by forming the housing using the plastic material.

In the above-described door opening and closing device for a vehicle, the housing is formed of a resin material, and thus, it is possible to achieve weight reduction or cost saving of the device, but it is not possible to fix the resin housing and the other metal member by caulking.

Thus, it is the object of the present invention to provide an improved door opening and closing device which appropriately performs the fixing of a resin housing and a metal member in a rotational direction.

### SUMMARY

The above object is solved by a door opening and closing device having the features of claim 1. Further developments are stated in the dependent claims.

A door opening and closing device for a vehicle according to an aspect of this invention includes: a supporting member which is interposed between a vehicle body and a door, and supports the door to be openable and closable according to expansion and contraction thereof, in which the supporting member includes a first housing which is formed of a resin in a shape of a tube and whose one end side is linked to one of the vehicle body and the door via a linking unit, a second housing which is formed of a resin in a shape of a tube, whose one end side is linked to the other one of the vehicle body and the door via a linking unit, and which is engaged with the first housing not to be relatively movable in a rotational direction and to be relatively movable in an axial direction, a spindle which is supported to be rotatable in the first housing, a spindle nut which is fixed in the second housing, and is screwed to the spindle, a coil spring which biases the first housing and the second housing in a direction in which the first housing and the second housing are separated from each other, a motor which is disposed in the first housing and is adapted to rotate and drive the spindle, a case which is formed of metal in a shape of a tube, and accommodates the motor therein, and a spline engaging unit which engages the first housing with the case or a metal member joined to the case not to be relatively movable in the rotational direction using a spline.

In the door opening and closing device for a vehicle according to the aspect of the present invention, when driving the motor, the spindle rotates, the spindle nut which is screwed to the spindle relatively moves in the axial direction with respect to the spindle, and thus, the second housing relatively moves in the axial direction with respect to the first housing. The second housing is engaged with the first housing to be relatively movable in the axial direction and not to be relatively movable in the rotational direction, the first housing is engaged with the case or the metal member joined to the case by the spline, and thus, the second housing to which the spindle nut is fixed is not relatively movable in the rotational direction with respect to the case or the metal member joined to the case via the first housing. In other words, the spindle nut is fixed to the case not to be relatively movable in the rotational direction. Accordingly, it is possible to prevent a rotating force of the motor from acting on a linking unit of the first housing or a linking unit of the second housing, and to prevent the supporting member from falling from the vehicle body or the door. Here, the first housing and the second housing may be engaged with each other not to be relatively movable in the rotational direction and to be relatively movable in the axial direction by the spline.

The door opening and closing device for a vehicle according to the aspect of the present invention may further include an annular member in which a bearing that supports the spindle to be rotatable is disposed on an inner circumferential surface, as the metal member, and the spline engaging unit may engage the first housing with the annular member using the spline that is formed on an outer circumferential surface of the annular member and on an inner circumferential surface of the first housing not to be relatively movable in the rotational direction. According to this configuration, it is possible to form the spline engaging unit in the first housing, and not to damage an external appearance.

The door opening and closing device for a vehicle according to the aspect of the present invention may further include an annular wall which extends to an inner radial side from the inner circumferential surface of the first housing, and supports one end side of the coil spring on one end surface in the axial direction; and an annular member which is joined to the case to be interposed between the other end surface of the annular wall and the case in the axial direction as the metal member, an annular groove may be formed on an end surface of the annular member which faces the other end surface of the annular wall, and an annular sealing member may be disposed in the annular groove. According to this configuration, since it is possible to press the sealing member disposed on the end surface of the annular member by a biasing force of the coil spring, it is possible to improve sealing properties between the first housing and the annular member. In addition, even when variation of manufacturing is generated in the first housing and the annular member, it is possible to maintain high sealing properties.

The door opening and closing device for a vehicle according to the aspect of the present invention may further include an annular wall which extends to an inner radial side from the inner circumferential surface of the first housing, and supports one end side of the coil spring on one end surface in the axial direction; and the annular member which is joined to the case to be interposed between the other end surface of the annular wall and the case in the axial direction, an annular groove may be formed on an end surface of the annular member which faces the other end surface of the annular wall, and an annular sealing member may be disposed in the annular groove. According to this configuration, since it is possible to press the sealing member disposed on the end surface of the annular member by a biasing force of the coil spring, it is possible to improve sealing properties between the first housing and the annular member. In addition, even when variation of manufacturing is generated in the first housing and the annular member, it is possible to maintain high sealing properties.

### BRIEF DESCRIPTION OF THE DRAWINGS

The foregoing and additional features and characteristics of the present invention will become more apparent from the following detailed description considered with the reference to the accompanying drawings, wherein:
Fig. 1 is an external appearance view illustrating an external appearance of a door opening and closing device for a vehicle as an example of the present invention ;
Fig. 2 is an external appearance view illustrating an external appearance of a supporting member;
Fig. 3 is a configuration view illustrating an outline of a configuration of the supporting member;
Fig. 4 is an exploded perspective view illustrating that the supporting member is exploded;
Figs. 5A and 5B are sectional views taken along VA-VA line and VB-VB line in Fig. 3; and
Fig. 6 is a partially enlarged view illustrating that a C region of Fig. 3 is enlarged.

### DETAILED DESCRIPTION

An embodiment disclosed here will be described by using an example.

### Embodiment

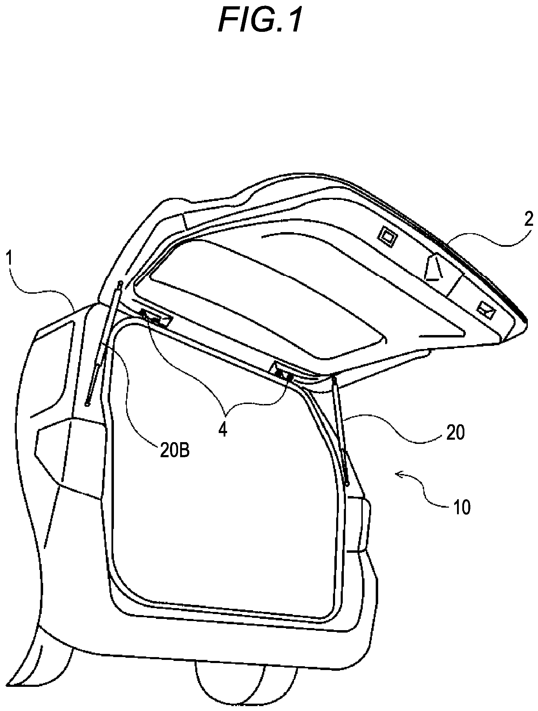

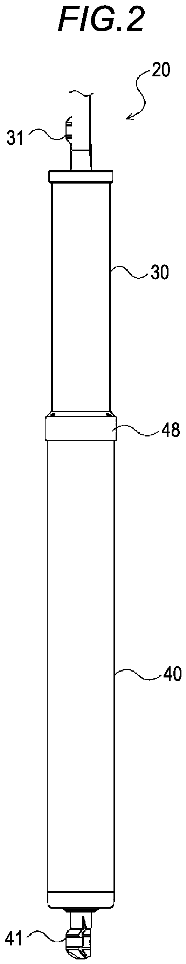

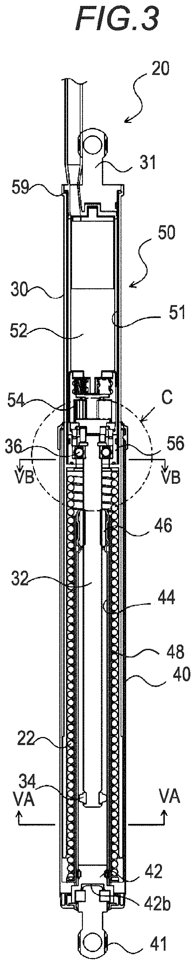

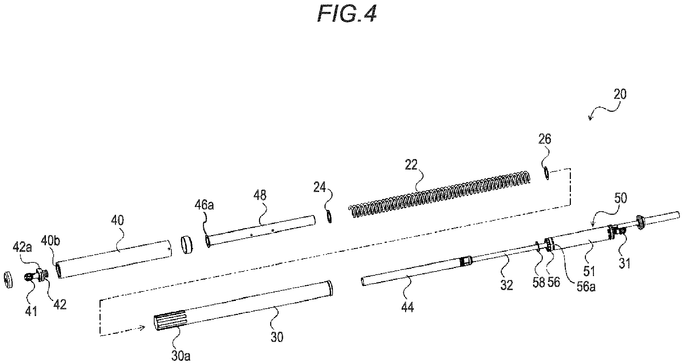

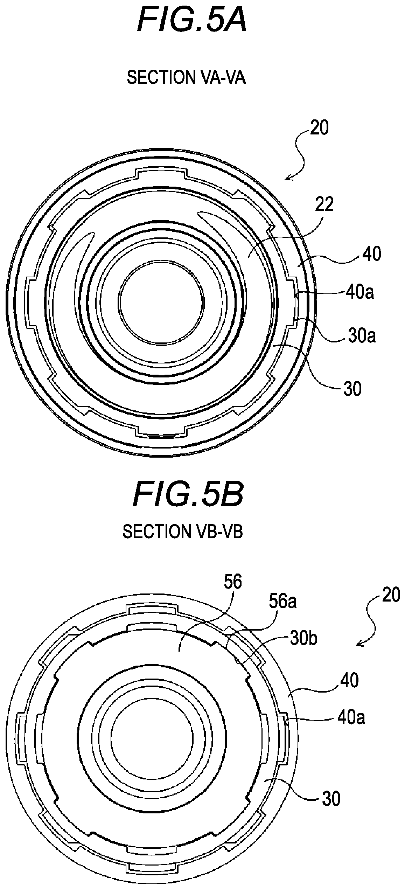

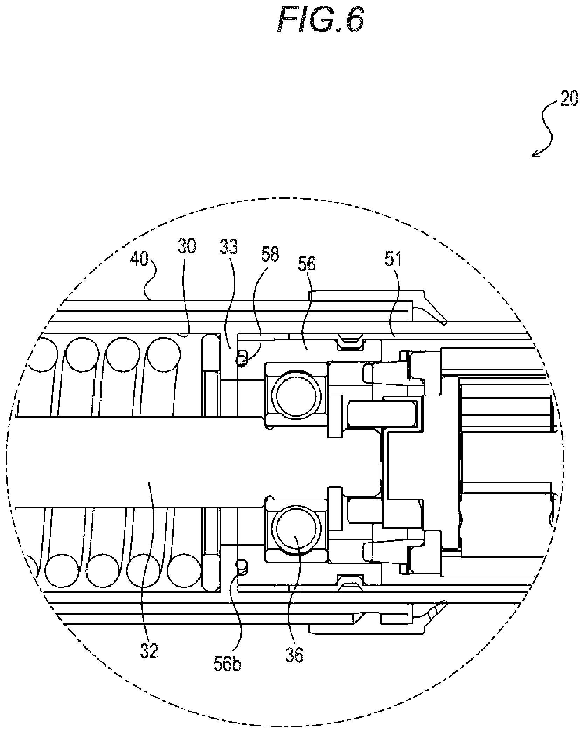

Fig. 1 is an external appearance view illustrating an external appearance of a door opening and closing device for a vehicle 10 as an example of the present invention , Fig. 2 is an external appearance view illustrating an external appearance of a supporting member 20, Fig. 3 is a configuration view illustrating an outline of a configuration of the supporting member 20, Fig. 4 is an exploded perspective view illustrating that the supporting member 20 is exploded, Figs. 5A and 5B are sectional views taken along VA-VA line and VB-VB line in Fig. 3; and Fig. 6 is a partially enlarged view illustrating that a C region of Fig. 3 is enlarged. In addition, Fig. 5A illustrates a sectional view taken along VA-VA line in Fig. 3, and Fig. 5B illustrates a sectional view taken along VB-VB line in Fig. 3.

As illustrated in Fig. 1, the door opening and closing device for a vehicle 10 of the example includes two supporting members 20 and 20B interposed between a vehicle body 1 and a door 2, and is configured as a power door device which opens and closes the door 2 by expanding and contracting the supporting member 20 by an actuator embedded in the supporting member 20. In the door 2, in the example, an upper end portion is attached to a rear portion of the vehicle body 1 via a hinge 4, and is configured as a flip-up type back door which is rotatable in the upward-and-downward direction using the hinge 4 as a fulcrum. The two supporting members 20 and 20B are respectively attached to both of the left and right ends in the vehicle width direction, and support the door 2 at both of the left and right ends.

As illustrated in Figs. 2 and 3, the supporting member 20 includes a first housing 30 which is formed in a cylindrical shape, a second housing 40 which is formed in a cylindrical shape having an inner diameter that is slightly greater than an outer diameter of the first housing 30, and a compression coil spring 22 which biases the first housing 30 and the second housing 40 in the direction of separating the first housing 30 and the second housing 40 from each other. The supporting member 20 expands and contracts by relatively moving in the axial direction in a state where one axial ends of the first housing 30 and the second housing 40 overlap each other.

The first housing 30 is a resin cylindrical member formed of a resin material by injection molding or the like, and as illustrated in Fig. 5A, a spline 30a (tooth-like groove) is formed on an outer circumferential surface. Similar to the first housing 30, the second housing 40 is a resin cylindrical member formed of a resin material by injection molding or the like, as illustrated in Fig. 5A, a spline 40a (tooth-like groove) meshed with the spline 30a of the first housing 30 is formed on an inner circumferential surface. In addition, as illustrated in Fig. 4, the spline 30a is formed in one axial end portion (left end portion in Fig. 4) of the first housing 30, the spline 40a is not illustrated, but is formed substantially across the entire region in the axial direction of the second housing 40. Accordingly, the first housing 30 and the second housing 40 are engaged with each other to be relatively movable in the axial direction and not to be relatively movable (not to be rotatable) in the rotational direction.

At the other axial ends of the first housing 30 and the second housing 40, a first socket 31 and a second socket 41 to which spheric head portions (not illustrated) of ball studs that are respectively fixed to the vehicle body 1 and the door 2 are fitted, are provided. The first socket 31 and the second socket 41 are steel linking members, configure a spheric joint together with the ball stud, and link both end portions of the supporting member 20 (the other end portions of the first housing 30 and the second housing 40) with respect to the vehicle body 1 and the door 2 to be oscillatable. In addition, an annular sealing member 59 is disposed on an outer circumferential surface of the first socket 31. The sealing member 59 slidably comes into contact with an inner circumferential surface of the first housing 30, and seals a space between the first socket 31 and the first housing 30.

In the first housing 30, as illustrated in Fig. 3, a spindle 32 in which a spiral groove is formed on an outer circumferential surface, a driving unit 50 which rotates and drives the spindle 32, and an annular spring stopper 56 which supports the first housing 30 in the axial direction, are accommodated. The driving unit 50, the spring stopper 56, and the spindle 32 are disposed in this order from the first socket 31 provided at the other end of the first housing 30.

In a tip end portion (end portion on the second housing 40 side) of the spindle 32, an annular guide ring 34 is provided. A base end portion (end portion on the driving unit 50 side) of the spindle 32 is supported by a bearing 36 to be freely rotatable.

The spring stopper 56 is a steel annular member, and as illustrated in Figs. 3 and 6, the above-described bearing 36 is provided on an inner circumferential surface thereof. In addition, as illustrated in Fig. 5B, a spline 56a is formed on an outer circumferential surface of the spring stopper 56, and a spline 30b meshed with the spline 56a is formed on the inner circumferential surface of the first housing 30. The spring stopper 56 and the first housing 30 are engaged with each other not to be relatively movable (not to be rotatable) in the rotational direction by the splines 56a and 30b.

As illustrated in Fig. 3, the driving unit 50 includes a deceleration gear 54 which is formed by a planetary gear, a motor 52 having a rotation shaft connected to the spindle 32 via the deceleration gear 54, and a cylindrical unit case 51 which accommodates the deceleration gear 54 and the motor 52 therein. The unit case 51 is a steel case whose one axial end is joined to the first socket 31 by caulking, and whose the other axial end is joined to the steel spring stopper 56 by caulking.

In the second housing 40, as illustrated in Fig. 3, a cylindrical spindle guide tube 44 which has an inner circumferential surface on which the guide ring 34 attached to the tip end portion of the spindle 32 is slidable (movable) in the axial direction, and a cylindrical spring guide tube 48 in which the cylindrical spindle guide tube 44 is inserted into the inside thereof, are accommodated.

The spindle guide tube 44 is a steel cylindrical member, and the spindle 32 is inserted from one axial end, and the other axial end is coaxially fixed to a steel linking fitting 42 by caulking. The linking fitting 42 is a steel metal fitting which links the spindle guide tube 44 to the second socket 41 and the second housing 40, and as illustrated in Fig. 4, a cutout portion 42a is formed on an outer circumferential surface. The cutout portion 42a is engaged with a straight line portion 40b formed on the inner circumferential surface at the other axial end (left end in Fig. 4) of the second housing 40. The linking fitting 42 and the second housing 40 are engaged with each other not to be relatively movable (not to be rotatable) in the rotational direction by the cutout portion 42a and the straight line portion 40b. In addition, in the linking fitting 42, a recess portion 42b which is open toward the outer axial side is formed, and the second socket 41 is fitted to the recess portion 42b.

As illustrated in Fig. 3, a spindle nut 46 which is screwed to the spindle 32 inserted into the spindle guide tube 44 is attached to an inner circumferential surface of one axial end of the spindle guide tube 44 in a state where the rotation thereof is stopped. The spindle 32 and the spindle nut 46 configure a rotary-linear motion converting mechanism which converts a relative rotary motion and a linear motion of the spindle 32 and the spindle nut 46 to each other.

In a void between an outer circumferential surface of the spring guide tube 48 and the inner circumferential surface of the second housing 40, the above-described compression coil spring 22 is disposed. In the spring guide tube 48, a flange portion 46a is provided to extend to the outer radial side from the end surface. The flange portion 46a abuts against the bottom portion of the second housing 40, and one leg piece of the compression coil spring 22 is disposed via a washer 24.

As illustrated in Fig. 6, in the first housing 30, an annular wall 33 which extends to the inner radial side from the inner circumferential surface is formed in the axial center portion. On the end surface (end surface on the left side in Fig. 6) on the second housing 40 side on the annular wall 33, the other leg piece of the compression coil spring 22 is disposed via a washer 26. As described above, the one leg piece of the compression coil spring 22 is disposed in the flange portion 46a of the spring guide tube 48, the spring guide tube 48 abuts against the other axial end of the second housing 40, and thus, the first housing 30 is biased in the axial direction (rightward direction in Fig. 6) by a biasing force of the compression coil spring 22. In addition, on the end surface (end surface on the right side in Fig. 6) on the driving unit 50 side on the annular wall 33, the spring stopper 56 is disposed. As described above, the spring stopper 56 is joined to the unit case 51 by caulking, the unit case 51 is joined to the first socket 31 by caulking, and thus, the spring stopper 56 functions as a stopper which supports the first housing 30 in the axial direction.

In addition, in the spring stopper 56, an annular groove 56b is formed on an end surface which faces an end surface on the driving unit 50 side on the annular wall 33. In the annular groove 56b, an annular sealing member 58 is disposed. Since the annular wall 33 of the first housing 30 is biased in the axial direction (rightward direction in Fig. 6) by the biasing force of the compression coil spring 22, the sealing member 58 seals a space between the annular wall 33 of the first housing 30 and the spring stopper 56 in a state of being crushed by the annular wall 33 of the first housing 30.

Next, an operation of the door opening and closing device for a vehicle 10 of the example configured in this manner will be described. The opening and closing of the door 2 can be performed by driving the driving unit 50 (motor 52) or by a manual operation of an operator. In a case of opening and closing the door 2 by driving the driving unit 50, the opening of the door 2 is performed by rotating and driving the motor 52 in a first direction (normal rotational direction). When the motor 52 is rotated and driven in the first direction, torque from the motor 52 is amplified by the deceleration gear 54 and transmitted to the spindle 32, and the spindle 32 is rotated in the first direction. When the spindle 32 rotates in the first direction, the rotary motion of the spindle 32 is converted to the linear motion of the spindle nut 46 in the direction of extending the supporting member 20. Accordingly, the supporting member 20 extends, and the door 2 is opened. Meanwhile, the closing of the door 2 is performed by rotating and driving the motor 52 in a second direction (reverse rotational direction). When the motor 52 is rotated and driven in the second direction, torque from the motor 52 is amplified by the deceleration gear 54 and transmitted to the spindle 32, and the spindle 32 is rotated in the second direction. When the spindle 32 rotates in the second direction, the rotary motion of the spindle 32 is converted to the linear motion of the spindle nut 46 in the direction of contracting the supporting member 20. Accordingly, the supporting member 20 contracts, and the door 2 is closed.

The motor 52 is linked to the second socket 41 via the spindle 32, the spindle nut 46, the spindle guide tube 44, and the linking fitting 42 from the deceleration gear 54, and further, is linked to the first socket 31 via the second housing 40, the first housing 30, the spring stopper 56, and the unit case 51 from the linking fitting 42. Since the first socket 31 and the second socket 41 are respectively linked to the vehicle body 1 and the door 2 by a spheric joint, when a rotating force of the motor 52 acts on the first socket 31 or the second socket 41, there is a concern that the first socket 31 or the second socket 41 falls from the vehicle body 1 or the door 2.

In the example, the spindle nut 46 is supported not to be rotatable with respect to the spindle guide tube 44, the spindle guide tube 44 is supported not to be rotatable with respect to the linking fitting 42 by caulking, and the linking fitting 42 is supported not to be rotatable with respect to the second housing 40 by the cutout portion 42a and the straight line portion 40b. In addition, the second housing 40 is supported not to be rotatable with respect to the first housing 30 by the splines 40a and 30a, the first housing 30 is supported not to be rotatable with respect to the spring stopper 56 by the splines 30b and 56a, and the spring stopper 56 is supported not to be rotatable with respect to the unit case 51 which accommodates the motor 52 therein by caulking. In other words, the spindle nut 46 is supported not to be rotatable with respect to the unit case 51. Therefore, since it is possible to receive the rotating force transmitted to the spindle nut 46 from the motor 52 by the unit case 51, the rotating force may not act on the first socket 31 or the second socket 41 which is linking unit between the vehicle body 1 or the door 2, and it is possible to prevent the supporting member 20 from falling with respect to the vehicle body 1 or the door 2.

The door opening and closing device for a vehicle 10 of the example described above rotates and drives the spindle 32 by the motor 52 disposed in the first housing 30, and relatively moves the second housing 40 in the axial direction with respect to the first housing 30 by the spindle nut 46 screwed to the spindle 32, and in the device, the first housing 30 and the second housing 40 are formed of a resin, and the resin first housing 30 and the resin second housing 40 are engaged with each other not to be rotatable by the splines 30a and 40a. In addition, the steel unit case 51 which accommodates the motor 52 therein is engaged with the steel spring stopper 56 and the steel first socket 31 not to be rotatable by caulking, and the resin first housing 30 and the steel spring stopper 56 are engaged with each other not to be rotatable by the splines 30b and 56a. In addition, the spindle guide tube 44 in which the spindle nut 46 is fixed in a state where the rotation thereof is stopped and the linking fitting 42 are engaged with each other not to be rotatable by caulking, and engages the linking fitting 42 and the second housing 40 with each other by the cutout portion 42a and the straight line portion 40b not to be rotatable. Accordingly, since the spindle nut 46 is supported by the unit case 51 which accommodates the motor 52 therein not to be rotatable, it is possible to prevent the rotating force of the motor 52 from acting on the first socket 31 or the second socket 41, and to prevent the supporting member 20 from falling from the vehicle body 1 or the door 2.

In addition, according to the door opening and closing device for a vehicle 10 of the example, since engaging the first housing 30 not to be rotatable by the spring stopper 56 and the splines 30b and 56a which are disposed in the first housing 30, it is possible to prevent damage of the external appearance by making the splines 30b and 56a not to be seen from the outside.

Furthermore, according to the door opening and closing device for a vehicle 10 of the example, the annular wall 33 which extends to the inner radial side from the inner circumferential surface of the first housing 30 is formed such that one leg piece of the compression coil spring 22 is disposed on one end surface, the spring stopper 56 is disposed on the other end surface of the annular wall 33, the annular groove 56b is formed on the end surface which faces the annular wall 33 of the spring stopper 56, and the sealing member 58 is disposed in the annular groove 56b. Accordingly, since the sealing member 58 is crushed by the annular wall 33 by the biasing force of the compression coil spring 22, it is possible to improve sealing properties between the annular wall 33 of the first housing 30 and the spring stopper 56. In addition, it is possible to maintain high sealing properties regardless of variation of manufacturing of the first housing 30 and the spring stopper 56.

In the door opening and closing device for a vehicle 10 of the example, the spring stopper 56 which is joined to the unit case 51 by caulking is engaged with the first housing 30 by the splines 56a and 30b not to be rotatable, but in a case of a metal member which is mechanically joined to the unit case 51, for example, a member which engages the first socket 31 joined to the unit case 51 by caulking with the first housing 30 not to be rotatable by the spline, any member and the first housing 30 may be engaged by the spline. In addition, the unit case 51 may be directly engaged with the first housing 30 by the spline.

In the door opening and closing device for a vehicle 10 of the example, the annular groove 56b is formed on the end surface of the spring stopper 51 which faces the annular wall 33 of the first housing 30 and the annular sealing member 58 is disposed, but the annular groove may be formed on the annular wall 33 of the first housing and the annular sealing member may be disposed. In addition, the sealing member may be disposed between the outer circumferential surface of the spring stopper 56 and the inner circumferential surface of the first housing 30.

In the door opening and closing device for a vehicle 10 of the example, the joining of the unit case 51 and the first socket 31 and the joining of the unit case 51 and the spring stopper 56 are performed by caulking, but may be performed by a method other than the caulking, for example, welding or adhering using an adhesive. In addition, the joining of the spindle guide tube 44 and the linking fitting 42 may be similarly performed by a method other than the caulking, for example, welding or adhering using an adhesive.

In the door opening and closing device for a vehicle 10 of the example, the engaging of the linking fitting 42 and the second housing 40 is performed by the cutout portion 42a and the straight line portion 40b, but the engaging of the linking fitting 42 and the second housing 40 not to be rotatable may be performed by another method, such as using a spline.

In the door opening and closing device for a vehicle 10 of the example, the linking fitting 42 and the second socket 41 are formed to be separated from each other, but the linking fitting 42 may be formed to be integrated with the second socket 41.

In the door opening and closing device for a vehicle 10 of the example, the two supporting members 20 and 20B which support the opening and closing of the door 2 are provided, but the number of supporting members may be one, or may be three or more.

In the door opening and closing device for a vehicle 10 of the example, the driving unit 50 is embedded in the first housing 30 having a small diameter of the first housing 30 and the second housing 40, but the driving unit 50 may be embedded in the second housing 40 having a large diameter.

In the example, the door opening and closing device for a vehicle disclosed here is employed in opening and closing the backdoor provided in a rear portion of the vehicle body 1, but may be employed in opening and closing other doors for a vehicle.

A correspondence relationship of main elements of the example and main elements disclosed here which are described above will be described. In the example, the supporting member 20 corresponds to "supporting member", the first housing 30 corresponds to "first housing", the second housing 40 corresponds to "second housing", the spindle 32 corresponds to "spindle", the spindle nut 46 corresponds to "spindle nut", the compression coil spring 22 corresponds to "coil spring", the motor 52 corresponds to "motor", the unit case 51 corresponds to "case", and the spline 56a and the spline 30b correspond to "spline engaging unit". In addition, the annular wall 33 corresponds to "annular wall", the spring stopper 56 corresponds to "annular member", and the bearing 36 corresponds to "bearing". In addition, the sealing member 58 corresponds to "sealing member".

In addition, the correspondence relationship of the main elements of the example and the main elements disclosed here which are described above, is an example for specifically describing the aspect for realizing the present invention described in the field of the method for solving the problem. Therefore, the elements are not limited to the elements disclosed here which are described in the field of the method for solving the problem. In other words, interpretation of the present invention described in the field of the method for solving the problem should be based on the description of the field, and the example is merely a specific example disclosed here which is described in the field of the method for solving the problem.

The embodiment for realizing the present invention is described above using an example, but the present invention is not limited to the example at all, and it is needless to say that the present invention can be realized in various aspects within a range which does not depart the idea of the present invention.

The present invention can be used in the manufacturing industry or the like of the door opening and closing device for a vehicle.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

The door opening and closing device (10) for a vehicle includes: a supporting member (20, 20B) interposed between a vehicle body (1) and a door (2), and supporting the door to be openable and closable. The supporting member includes first and second housings (30, 40) whose one end sides are linked to the vehicle body or the door via a linking unit, a spindle (32), a spindle nut (46), a coil spring (22) biasing the first and second housings in a direction in which the first and second housings are separated from each other, a motor (52) disposed in the first housing and rotating and driving the spindle, a case (51) accommodating the motor therein, and a spline engaging unit engaging the first housing with the case or a metal member joined to the case not to be relatively movable in the rotational direction using a spline (30b, 56a).

## Claims

1. A door opening and closing device (10) for a vehicle comprising:
a supporting member (20, 20B) which is interposed between a vehicle body (1) and a door (2), and supports the door to be openable and closable according to expansion and contraction thereof,
wherein the supporting member includes
a first housing (30) which is formed of a resin in a shape of a tube and whose one end side is linked to one of the vehicle body and the door via a linking unit,
a second housing (40) which is formed of a resin in a shape of a tube, whose one end side is linked to the other one of the vehicle body and the door via a linking unit, and which is engaged with the first housing not to be relatively movable in a rotational direction and to be relatively movable in an axial direction,
a spindle (32) which is supported to be rotatable in the first housing,
a spindle nut (46) which is fixed in the second housing, and is screwed to the spindle,
a coil spring (22) which biases the first housing and the second housing in a direction in which the first housing and the second housing are separated from each other,
a motor (52) which is disposed in the first housing and is adapted to rotate and drive the spindle,
a case (51) which is formed of metal in a shape of a tube, and accommodates the motor therein, and
a spline engaging unit which engages the first housing with the case or a metal member joined to the case not to be relatively movable in the rotational direction using a spline (30b, 56a).

2. The door opening and closing device for a vehicle according to claim 1, further comprising:
an annular member (56) in which a bearing (36) that supports the spindle to be rotatable is disposed on an inner circumferential surface, as the metal member,
wherein the spline engaging unit engages the first housing with the annular member using the spline that is formed on an outer circumferential surface of the annular member and on an inner circumferential surface of the first housing not to be relatively movable in the rotational direction.

3. The door opening and closing device for a vehicle according to claim 1, further comprising:
an annular wall (31) which extends to an inner radial side from the inner circumferential surface of the first housing, and supports one end side of the coil spring on one end surface in the axial direction; and
an annular member (56) which is joined to the case to be interposed between the other end surface of the annular wall and the case in the axial direction as the metal member,
wherein an annular groove (56b) is formed on an end surface of the annular member which faces the other end surface of the annular wall, and
wherein an annular sealing member (58) is disposed in the annular groove.

4. The door opening and closing device for a vehicle according to claim 2, further comprising:
an annular wall (31) which extends to an inner radial side from the inner circumferential surface of the first housing, and supports one end side of the coil spring on one end surface in the axial direction; and
the annular member (56) which is joined to the case to be interposed between the other end surface of the annular wall and the case in the axial direction,
wherein an annular groove (56b) is formed on an end surface of the annular member which faces the other end surface of the annular wall, and
wherein an annular sealing member (58) is disposed in the annular groove.
